# EUROPEAN PATENT SPECIFICATION

(11) **EP 2 989 812 B1**
(45) Date of publication and mention of the grant of the patent: **14.11.2018**
(21) Application number: 14801384.0
(22) Date of filing: 22.05.2014
(51) Int. Cl.: H04W 36/00, H04W 76/12

(54) **SYSTEM AND METHOD FOR DISTRIBUTED EVOLVED PACKET CORE ARCHITECTURE**
SYSTEM UND VERFAHREN FÜR VERTEILTE ENTWICKELTE PAKETKERNARCHITEKTUR
SYSTÈME ET PROCÉDÉ POUR ARCHITECTURE DE NOYAU DE PAQUET ÉVOLUÉ DISTRIBUÉ

(30) Priority: 22.05.2013 US 201361826362 P; 21.05.2014 US 201414284107
(43) Date of publication of application: 02.03.2016
(60) Divisional application: 18192227.9
(73) Proprietor: Huawei Technologies Co., Ltd., Longgang District Shenzhen, Guangdong 518129 (CN)
(72) Inventor: JOHN, Kaippallimalil, Mathew, Richardson, Texas 75082 (US); CHAN, Hinghung Anthony, Plano Texas 75093 (US); XIANG, Zhixian, Shenzhen, Guangdong 518129 (CN); SABOORIAN, Khosrow Tony, Shenzhen, Guangdong 518129 (CN); MANNING, Serge, Plano Texas 75025 (US)
(74) Representative: Gill Jennings & Every LLP
(86) International application number: PCT/US2014/039225
(87) International publication number: WO 2014/190197

(56) References cited:
- WO-A1-2012/050841
- WO-A1-2012/050841
- WO-A1-2012/156171
- WO-A1-2012/156171
- WO-A1-2013/041574
- WO-A1-2013/060488
- WO-A2-2009/034071
- US-A1- 2010 232 353
- US-A1- 2010 309 881
- US-A1- 2011 075 675
- US-A1- 2011 158 171
- US-A1- 2011 176 407
- US-A1- 2011 286 430
- US-A1- 2012 113 959

## Description

### TECHNICAL FIELD

The present invention relates generally to an evolved packet core (EPC) architecture and, in particular embodiments, to a system and method for a distributed EPC.

### BACKGROUND

3GPP LTE and Wi-Fi use centralized architectures where user sessions are managed in highly centralized data centers or central offices. Due to the proliferation of highly functional user equipment (UE) that allow users to multi-task, for example, surf the internet, instant message and stream videos at the same time, the handling of user sessions in the data centers or central office can approach the performance limits of the data centers or central office.

In addition, with the increased deployment of small cells, het-net, machine to machine (M2M), and networks of devices, where thousands or millions of devices are attached, there are a large number of user sessions, some of which are more local (i.e., originate and terminate in nearby locations), while others are more distant. Each of these devices may be mobile. An evolved packet core (EPC) network anchors the Internet protocol (IP) session centrally and thus is able to maintain the same IP session while a device transitions between layer 2 anchor points.

WO 2009/034071 A2 relates to service continuation for a local breakout service in case of handover. WO 2013/060488 A1 relates to per - host locator to enable mobility gateway relocation. WO 2012/050841 A1 relates to method and apparatus for releasing connection with local GW when UE moves out of the residential/enterprise network coverage. WO 2012/156171 A1 relates to distributed gateway relocation with central internet protocol address allocation. US 20110286430 A1 relates to communication system and communication controlling method. WO 2013/041574 A1 relates to deferred address allocation of ipv4 or ipv6 in case of interworking between non-3gpp access and evolved packet core.

### SUMMARY OF THE INVENTION

The invention is set out in the appended set of claims.

The embodiments and/or examples of the following description which are not covered by the appended claims are considered as not being part of the present invention.

In accordance with a preferred embodiment of the present invention, a method of managing a user session and an internet protocol (IP) session for a connection between an user equipment (UE) and a network includes establishing, at a first distributed evolved packet core (EPC), the user session and the IP session over the connection through the first distributed EPC.

The first distributed EPC includes a first packet data network (PDN) gateway (PGW) at which the IP session is anchored. The method also includes holding original IP resources for the IP session and releasing original connection resources for the user session at the first distributed EPC when the UE moves beyond the first distributed EPC to a second distributed EPC. The method then establishes a tunnel between the first PGW and a second PGW for the second distributed EPC. The tunnel utilizes the original IP resources and new connection resources at the second distributed EPC. The method then routes data for the user session and the IP session from the tunnel, through the first PGW, and to the network.

An embodiment distributed EPC includes a user plane and a control plane. The user plane is couplable between a network and a radio node serving a UE. The user plane includes a PGW and a SGW. The PGW is configured to anchor an IP session for the UE. The SGW is configured to anchor a user session for the UE. The control plane includes a mobility management entity (MME) configured to coordinate a first connection for the IP session and the user session. When the UE transitions to being served by another radio node coupled to another distributed EPC, the MME is configured to instruct the PGW to release connection resources and hold IP resources for the first connection. The MME is further configured to inform a centralized EPC of the release and the hold. The MME is further configured to coordinate a second connection for the IP session and the user session through a tunnel between the PGW and another PGW for the another distributed EPC according to an authorization from the centralized EPC.

An embodiment EPC for serving a UE includes a central EPC, a first distributed EPC, and a second distributed EPC. The central EPC includes a home subscriber server (HSS) configured to store authentication information and to authenticate and identify the UE. The first distributed EPC includes a first SGW, a first PGW, and a first MME. The first SGW is couplable to a first radio node. The first SGW is configured to anchor a user session for the UE and to route user data to and from the UE through the first radio node. The first PGW is couplable between the first SGW and a network. The first PGW is configured to anchor an IP session for the UE and to route the user data between the first SGW and the network. The first MME is configured to receive an authentication of the UE from the HSS and coordinate establishment of the user session and the IP session. The second distributed EPC includes a second SGW, a second PGW, and a second MME. The second SGW is couplable to a second radio node and is configured to route the user data to and from the second radio node. The second PGW is couplable between the second SGW and the network. The second PGW is configured to route the user data between the second SGW and the network. When the UE transitions from being served by the first radio node to being served by the second radio node, the first MME is configured to instruct the first PGW to release connection resources for the user session and to hold IP resources for the IP session. The first MME then informs the HSS of the release of the connection resources and of the hold of the IP resources. When the UE initiates connectivity with the second radio node, the second MME is configured to receive a re-authentication of the UE from the HSS. The second MME then coordinates with the HSS and the first MME to establish a tunnel between the first PGW and the second PGW. The tunnel is established according to the IP resources. The user data is then routed from the UE to the second PGW, through the tunnel to the first PGW, and to the network.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 is a block diagram of one embodiment of a communication system;
Figure 2 is a block diagram of one embodiment of an EPC;
Figure 3 is a block diagram illustrating a UE transitioning from being served by one distributed EPC to being served by another distributed EPC;
Figure 4 is a flow diagram of one embodiment of a method of managing a user session and an IP session for a connection between a UE and a network; and
Figure 5 is a block diagram of a processing system.

### DETAILED DESCRIPTION OF ILLUSTRATIVE EMBODIMENTS

The making and using of embodiments are discussed in detail below. It should be appreciated, however, that the present invention provides many applicable inventive concepts that may be embodied in a wide variety of specific contexts. The specific embodiments discussed are merely illustrative of specific ways to make and use the invention, and do not limit the scope of the invention.

The EPC is a network architecture that provides a functional framework for handling user data and user sessions for multiple users, i.e., UEs. The EPC connects an access network, such as an LTE access network, to one or more external networks. External networks can include the Internet, corporate networks, and the IP multimedia core network subsystem (IMS). The access network typically includes multiple radio nodes to which the various UEs connect to access the external networks or to communicate with other UEs on the access network.

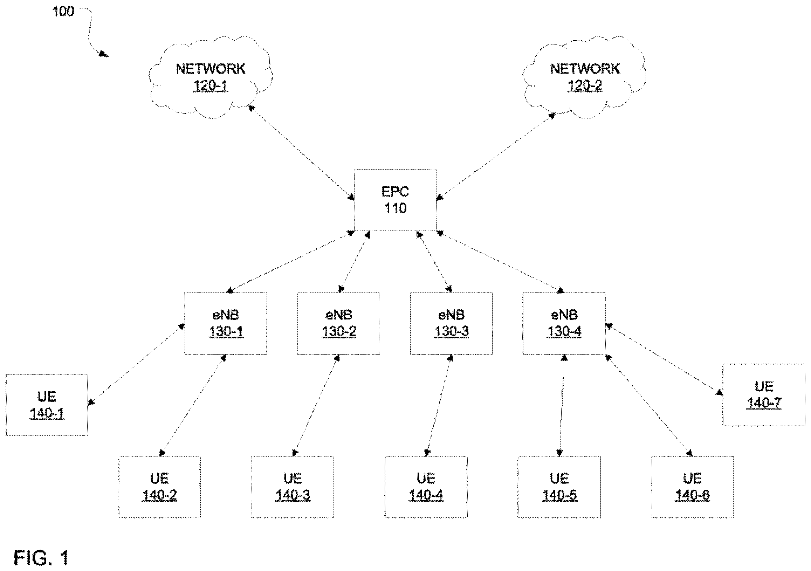

Figure 1 is a block diagram of one embodiment of a communication system 100. Communication system 100 includes an EPC 110 that connects an access network to external networks 120-1 and 120-2. The access network includes multiple radio nodes. In certain embodiments, a radio node is an enhanced node B (eNB). Communication system 100 includes eNBs 130-1 through 130-4. eNBs 130-1 through 130-4 provide radio access to mobile users, i.e., UEs 140-1 through 140-7. eNBs 130-1 through 130-4 provide access to external networks 120-1 and 120-2.

In alternative embodiments, communication system 100 can include any number of radio nodes and UEs. In other embodiments, EPC 110 can connect the access network to any number of external networks. In certain embodiments, multiple EPCs can connect to each other through external networks 120-1 and 120-2.

A typical EPC includes several functional modules, the functions of which are generally categorized as in a user plane or in a control plane. The user plane handles user data, i.e., payload data. The control plane coordinates connections and administers policies. Basic elements of the user plane include serving gateways (SGWs) and a packet data network (PDN) gateway (PGW). Basic elements of the control plane include a home subscriber server (HSS), a mobility management entity (MME), a policy and charging rules function (PCRF), and a subscriber provisioning repository (SPR). For further information regarding the EPC network architecture, see 3GPP Technical Specification 23.002, March 10, 2014.

The HSS is a database that contains user-related and subscriber-related information. The HSS also provides support functions in mobility management, call and session setup, user authentication, and access authorization. The MME handles signaling and logic related to selecting appropriate eNBs, SGWs, and PGWs, coordinating and setting up connections, and managing resources for various sessions. The MME also supports authentication and identification, among many other functions. The PCRF is a policy decision point for policy and charging control of service data flows. The PCRF also selects and provides applicable policy and charging decisions. In some cases, the PCRF provides dynamic quality of service (QoS) control policies. The SPR stores subscriber related information needed for subscription-based policies and charging control by the PCRF.

SGWs transport IP data traffic between UEs and external networks. The SGWs serve as the interface between radio nodes and the EPC and also serve as an anchor point for UE sessions and for layer 2 mobility among radio nodes. The SGWs are logically connected to the PGW. The PGW anchors IP sessions for the UEs and serves as an interface between external networks and the EPC. The PGW transports IP data traffic to and from the external networks, which are sometimes referred to as PDNs.

During a UE's transition from being served by a radio node coupled to one PGW to being served by another radio node coupled to another PGW, in a typical EPC, a first MME for the one PGW informs a second MME for the other PGW about context transfer during handover. The communication is initiated upon a request by the UE to the first MME to release its resources. It is realized herein that the UE can inform the second MME of the context transfer directly, and the second MME can inform the first MME.

A typical system hosts the SGW, PGW and servers such as MME, PCRF, etc., in a centralized data center or central office. Various networks, such as broadband, cable or dedicated fiber networks, backhaul IP traffic between the eNBs and the SGW. All the IP sessions for the corresponding user sessions are backhauled to the PGW in the central data center. From there the IP sessions are routed to respective destinations. When the UE sessions in a particular region served by the EPC increase, or reach a certain density, it is realized herein, the backhauled IP sessions will approach the capacity of the PGW.

It is realized herein that user sessions and IP sessions can be more efficiently handled by distributing certain EPC functionality while retaining centralization of other EPC functionality. Session handling functions, including those carried out by the MME, SGW, and PGW, can be distributed more locally with respect to access networks and their respective radio nodes. Distributed functionality can be implemented on dedicated servers or can be implemented virtually at the various distributed locations. It is realized herein that certain subscription related functionality, including those carried out by the HSS and SPR, can remain centralized, while others, including that carried out by the PCRF, can be distributed. The centralized components for policy and network selection can manage static, overall policy for the domain. The distributed components can manage policy and network selection at a user level, per IP data flow. It is also realized herein that policy and network selection can be partially or fully distributed. When partially distributed, a centralized policy and network selection function coordinates overall policy with subscriber information and dynamic network status. Otherwise, in fully distributed architectures, these functions are distributed to the various distributed to the various distributed EPCs. It is further realized herein that in a distributed EPC, IP data flows are not necessarily backhauled to a central data center; rather they are routed to the destination external network from the distributed EPC.

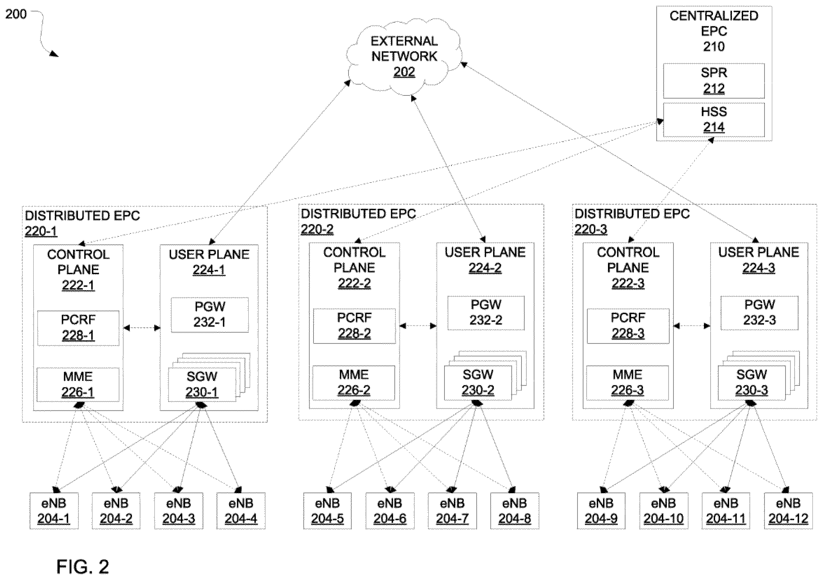

Figure 2 is a block diagram of one embodiment of an EPC 200. EPC 200 includes a centralized EPC 210 and distributed EPCs 220-1, 220-2, and 220-3. Centralized EPC 210 includes an HSS 214 and a SPR 212. Distributed EPCs 220-1, 220-2, and 220-3 connect eNBs 204-1 through 204-12 to an external network 202.

Each of distributed EPCs 220-1, 220-2, and 220-3 include respective control planes and user planes. For example, distributed EPC 220-1 includes a control plane 222-1 and a user plane 224-1. User plane 224-1 handles user data flowing from eNBs 204-1 through 204-4 to external network 202. User plane 224-1 includes a plurality of SGWs 230-1 that serve as an interface between EPC 200 and eNBs 204-1 through 204-4. SGWs 230-1 anchor user sessions for UEs being served by eNBs 204-1 through 204-4. SGWs 230-1 are logically connected to a PGW 232-1. PGW 232-1 serves as an interface between EPC 200 and external network 202. PGW 232-1 anchors IP sessions for UEs being served by eNBs 204-1 through 204-4. Control plane 222-1 includes PCRF 228-1 and MME 226-1. PCRF 228-1 serves as a policy decision point for PGW 232-1. MME 226-1 coordinates connections for UEs through eNBs 204-1 through 204-4, SGWs 230-1, and PGW 232-1. Certain control signals flow from control plane 220-1 up to centralized EPC 210.

PCRFs 228-1 through 228-3, MMEs 226-1 through 226-3, PGWs 232-1 through 232-3, and SGWs 230-1 through 230-3 can be implemented in one or more processors, one or more application specific integrated circuits (ASICs), one or more field-programmable gate arrays (FPGAs), dedicated logic circuitry, or any combination thereof, all collectively referred to as a processor. The respective functions for PCRFs 228-1 through 228-3 and MMEs 226-1 through 226-3 can be stored as instructions in non-transitory memory for execution by the processor.

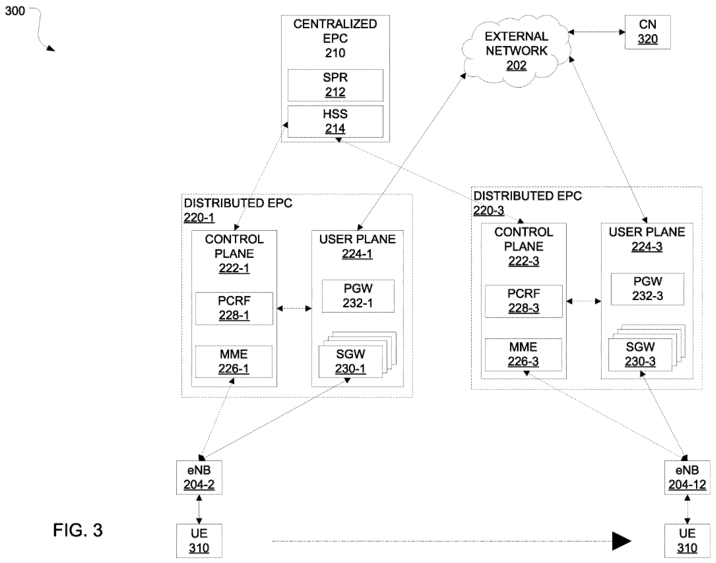

Figure 3 is a block diagram of an EPC 300 illustrating how a UE 310 transitions from being served by an eNB 204-2 to being served by an eNB 204-12. EPC 300 includes centralized EPC 210 and distributed EPCs 220-1 and 220-3 that connect external network 202 to UEs being served by eNBs 204-1 through 204-12, all from the embodiment of Figure 2. EPC 300 serves UE 310 by connecting it to a corresponding node (CN) 320 through external network 202.

Initially, UE 310 is served by distributed EPC 220-1 through eNB 204-2. UE 310 is authenticated by HSS 214 via control signaling from MME 226-1. Once authenticated, an IP data flow is established from UE 310, through eNB 204-2, SGW 230-1, PGW 232-1, and on through external network 202 to CN 320. A user session for UE 310 is anchored at SGW 230-1. An IP session is anchored at PGW 232-1.

When UE 310 changes location, it transitions from being served by eNB 204-2 to being served by eNB 204-12. UE 310 signals eNB 204-12, and ultimately MME 226-3 to request release of connectivity resources. MME 226-3 informs MME 226-1 of the request, and MME 226-1 instructs PGW 232-1 to release the connectivity resources and signals HSS 214 to notify it of the released connectivity resources. MME 226-1 also informs HSS 214 that IP resources for UE 310 are being held, which generally includes an IP address for UE 310. HSS 214 is configured to maintain multiple session bindings for UE 310.

UE 310 then initializes a connection with eNB 204-12 at its new location. eNB 204-12 relays the control signal to MME 226-3 to setup the connection with the held IP resources. MME 226-3 re-authenticates UE 310 with HSS 214. HSS 214 provides the held IP resources, including the address of PGW 232-1. MME 226-3 coordinates the connection with PGW 232-3 through SGW 230-3 and eNB 204-12. MME 226-3 also coordinates with PGW 232-3 to establish a tunnel from PGW 232-3 and PGW 232-1. The IP session remains anchored at PGW 232-1, while the user session transitions to SGW 230-3. User data from UE 310 is then routed from eNB 204-12, to SGW 230-3, to PGW 232-3, through the tunnel to PGW 232-1, and on to external network 202 and CN 320.

UE 310 can also establish new IP sessions directly through SGW 230-3 and PGW 232-3 to external network 202, all while maintaining the IP data flow through the tunnel to PGW 232-1 for the original IP session.

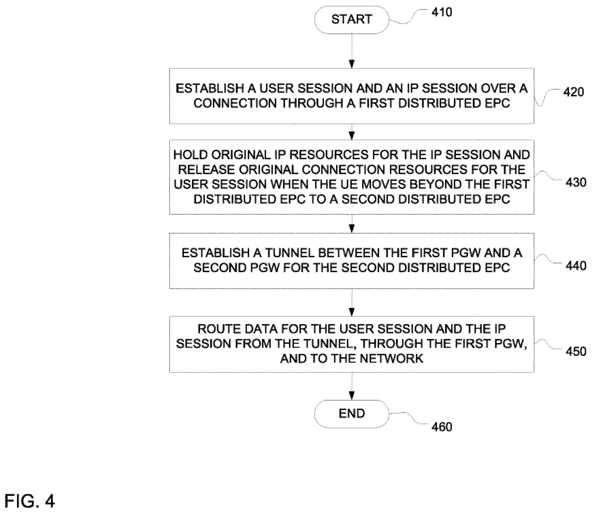

Figure 4 is a flow diagram for one embodiment of a method of managing a user session and an IP session for a connection between a UE and a network. The method begins at a start step 410. At a first connecting step 420, a user session and an IP session are established at a first distributed EPC. The IP session is anchored at a first PGW for the first distributed EPC. At a transition step 430, when the UE moves beyond the first distributed EPC to a second distributed EPC, the original connection resources for the user session are released. The original IP resources are held. The first distributed EPC notifies an HSS at a central EPC of the held IP resources and of the released connection resources. At a second connecting step 440, a tunnel is established between the first PGW and a second PGW for the second distributed EPC. The tunnel uses the original IP resources, retrieved from the HSS. The new connection uses new connection resources coordinated through the second distributed EPC. The tunnel is established by a coordination between a first MME at the first distributed EPC and a second MME at the second distributed EPC. At a routing step 450, user data is then routed from the UE, to the second PGW, through the tunnel to the first PGW, and to the network. The method then ends at an end step 460.

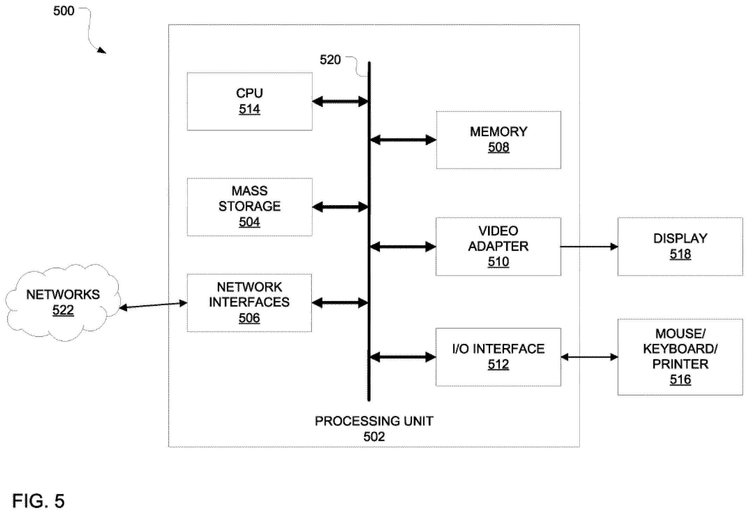

Figure 5 is a block diagram of a processing system 500 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 500 may comprise a processing unit 502 equipped with one or more input/output devices, such as a speaker, microphone, mouse, touchscreen, keypad, keyboard, printer, display, and the like. The processing unit may include a central processing unit (CPU) 514, memory 508, a mass storage device 504, a video adapter 510, and an I/O interface 512 connected to a bus 520.

The bus 520 may be one or more of any type of several bus architectures including a memory bus or memory controller, a peripheral bus, video bus, or the like. The CPU 514 may comprise any type of electronic data processor. The memory 508 may comprise any type of system memory such as static random access memory (SRAM), dynamic random access memory (DRAM), synchronous DRAM (SDRAM), read-only memory (ROM), a combination thereof, or the like. In an embodiment, the memory 508 may include ROM for use at boot-up, and DRAM for program and data storage for use while executing programs.

The mass storage 504 may comprise any type of storage device configured to store data, programs, and other information and to make the data, programs, and other information accessible via the bus 520. The mass storage 504 may comprise, for example, one or more of a solid state drive, hard disk drive, a magnetic disk drive, an optical disk drive, or the like.

The video adapter 510 and the I/O interface 512 provide interfaces to couple external input and output devices to the processing unit 502. As illustrated, examples of input and output devices include a display 518 coupled to the video adapter 510 and a mouse/keyboard/printer 516 coupled to the I/O interface 512. Other devices may be coupled to the processing unit 502 and additional or fewer interface cards may be utilized. For example, a serial interface such as Universal Serial Bus (USB) (not shown) may be used to provide an interface for a printer.

The processing unit 502 also includes one or more network interfaces 506, which may comprise wired links, such as an Ethernet cable or the like, and/or wireless links to access nodes or different networks. The network interfaces 506 allow the processing unit 502 to communicate with remote units via the networks. For example, the network interfaces 506 may provide wireless communication via one or more transmitters/transmit antennas and one or more receivers/receive antennas. In an embodiment, the processing unit 502 is coupled to a local-area network 522 or a wide-area network for data processing and communications with remote devices, such as other processing units, the Internet, remote storage facilities, or the like.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method, performed at a first distributed evolved packet core, EPC, (220), of managing a user session and an internet protocol, IP session for a connection between an user equipment, UE and a network, comprising:
establishing (420) the user session and the IP session over the connection through the first distributed EPC, wherein the first distributed EPC comprises a first packet data network, PDN gateway, PGW at which the IP session is anchored;
holding (430) original IP resources for the IP session and releasing original connection resources for the user session at the first distributed EPC when the UE moves beyond the first distributed EPC to a second distributed EPC;
establishing (440) a tunnel between the first PGW and a second PGW for the second distributed EPC, wherein the tunnel utilizes the original IP resources and new connection resources at the second distributed EPC; and
routing (450) data for the user session and the IP session from the tunnel, through the first PGW, and to the network.

2. The method of Claim 1 wherein the holding (430) the original IP resources and the releasing the original connection resources further comprise informing a home subscriber server, HSS at a centralized EPC.

3. The method of Claim 2 wherein the establishing (440) the tunnel includes re-authenticating the UE with the HSS according to the original IP resources.

4. The method of Claim 3 wherein the establishing (440) the tunnel includes obtaining values of the original IP resources from the HSS.

5. The method of Claim 2 wherein the establishing (440) the tunnel includes coordinating, by a first mobility management entity, MME at the first distributed EPC, with a second MME at the second distributed EPC according to the original IP resources.

6. The method of Claim 1 further comprising receiving a request, at a second mobility management entity, MME at the second distributed EPC, from the UE to release the original connection resources and to maintain the original IP resources and the IP session.

7. The method of Claim 6 further comprising forwarding the request to release the original connection resources to a first MME at the first distributed EPC.

8. The method of Claim 1 wherein the establishing (440) the user session and the IP session, the holding and releasing, the establishing the tunnel, and the routing are carried out by virtual functions implemented on at least one processing system.

9. A distributed evolved packet core, EPC (220), comprising:
a user plane (224) couplable between a network (202) and a radio node (204) serving a user equipment, UE (140), wherein the user plane (224) comprises:
a packet data network gateway, PGW (232) configured to anchor an internet protocol, IP session for the UE, and
a serving gateway, SGW (230) configured to anchor a user session for the UE; and
a control plane (222) comprising a mobility management entity, MME (226) configured to coordinate a first connection for the IP session and the user session and, when the UE transitions to being served by another radio node (204) coupled to another distributed EPC (220), to:
instruct the PGW (232) to release connection resources and hold IP resources for the first connection,
inform a centralized EPC (210) of the release and the hold, and
coordinate a second connection for the IP session and the user session through a tunnel between the PGW (232) and another PGW (232) for the another distributed EPC, wherein the tunnel utilizes the held IP resources at the distributed EPC and new connection resources at the another distributed EPC;
the distributed EPC being configured to route data for the user session and the IP session from the tunnel, through the PGW at the distributed EPC, and to the network.

10. The distributed EPC (220) of Claim 9 wherein the SGW (230) is further configured to anchor the user session for UE mobility among a plurality of radio nodes (204) couplable to the SGW (230).

11. The distributed EPC (220) of claim 9 wherein the control plane is couplable to a home subscriber server, HSS (214) at the centralized EPC (210).

12. The distributed EPC (220) of Claim 11 wherein the MME (226) is further configured to authenticate the UE with the HSS (214) for the first connection.

13. The distributed EPC (220) of Claim 9 wherein the MME (226) is further configured to receive a request from another MME (226) for the another distributed EPC (220) to release the connection resources and to maintain the IP session for the first connection, wherein the request originates at the UE and passes from the UE to the another radio node (204), to the another MME (226).

14. The distributed EPC (232) of Claim 9 wherein the PGW (232), the SGW (230), and the MME (226) are implemented as virtual functions on at least one processing system.

## Patentansprüche

1. Verfahren, das an einem ersten verteilten entwickelten Paketkern, EPC, (220) durchgeführt wird, zum Verwalten einer Benutzersitzung und einer Internetprotokoll(IP)-Sitzung für eine Verbindung zwischen einer Teilnehmereinrichtung UE und einem Netzwerk, Folgendes umfassend:
Einrichten (420) der Benutzersitzung und der IP-Sitzung über die Verbindung durch den ersten verteilten EPC, wobei der erste verteilte EPC ein erstes Paketdatennetzwerk(PDN)-Gateway PGW umfasst, an dem die IP-Sitzung verankert ist;
Halten (430) von IP-Originalressourcen für die IP-Sitzung und Freigeben von Originalverbindungsressourcen für die Benutzersitzung am ersten verteilten EPC, wenn sich die UE über den ersten verteilten EPC hinaus zu einem zweiten verteilten EPC bewegt;
Einrichten (440) eines Tunnels zwischen dem ersten PGW und einem zweiten PGW für den zweiten verteilten EPC, wobei der Tunnel die IP-Originalressourcen und neue Verbindungsressourcen am zweiten verteilten EPC nutzt; und
Leiten (450) von Daten für die Benutzersitzung und die IP-Sitzung vom Tunnel durch das erste PGW und zum Netzwerk.

2. Verfahren nach Anspruch 1, wobei das Halten (430) der IP-Originalressourcen und das Freigeben der Originalverbindungsressourcen ferner das Informieren eines Heimteilnehmerservers HSS an einem zentralisierten EPC umfassen.

3. Verfahren nach Anspruch 2, wobei das Einrichten (440) des Tunnels das erneute Authentifizieren der UE beim HSS gemäß den IP-Originalressourcen beinhaltet.

4. Verfahren nach Anspruch 3, wobei das Einrichten (440) des Tunnels das Erhalten von Werten der IP-Originalressourcen vom HSS beinhaltet.

5. Verfahren nach Anspruch 2, wobei das Einrichten (440) des Tunnels das Koordinieren durch eine erste Mobilitätsverwaltungsentität MME am ersten verteilten EPC mit einer zweiten MME am zweiten verteilten EPC gemäß den IP-Originalressourcen beinhaltet.

6. Verfahren nach Anspruch 1, das ferner das Empfangen einer Anforderung an einer zweiten Mobilitätsverwaltungsentität MME am zweiten verteilten EPC von der UE, die Originalverbindungsressourcen freizugeben und die IP-Originalressourcen und die IP-Sitzung aufrechtzuerhalten, umfasst.

7. Verfahren nach Anspruch 6, das ferner das Weiterleiten der Anforderung, die Originalverbindungsressourcen freizugeben, zu einer ersten MME am ersten verteilten EPC umfasst.

8. Verfahren nach Anspruch 1, wobei das Einrichten (440) der Benutzersitzung und der IP-Sitzung, das Halten und Freigeben, das Einrichten des Tunnels und das Leiten von virtuellen Funktionen, die auf mindestens einem Verarbeitungssystem implementiert werden, ausgeführt werden.

9. Verteilter entwickelter Paketkern, EPC (220), der Folgendes umfasst:
eine Benutzerebene (224), die zwischen einem Netzwerk (202) und einem Funkknoten (204), der eine Teilnehmereinrichtung UE (140) bedient, koppelbar ist, wobei die Benutzerebene (224) Folgendes umfasst:
ein Paketdatennetzwerkgateway PGW (232), das dazu ausgelegt ist, eine Internetprotokoll(IP)-Sitzung für die UE zu verankern, und
ein bedienendes Gateway SGW (230), das dazu ausgelegt ist, eine Benutzersitzung für die UE zu verankern;
und
eine Steuerebene (222), die eine Mobilitätsverwaltungsentität MME (226) umfasst, die dazu ausgelegt ist, eine erste Verbindung für die IP-Sitzung und die Benutzersitzung zu koordinieren und, wenn die UE dazu übergeht, von einem anderen Funkknoten (204), der an einen anderen verteilten EPC (220) gekoppelt ist, bedient zu werden:
das PGW (232) anzuweisen, für die erste Verbindung Verbindungsressourcen freizugeben und IP-Ressourcen zu halten,
einen zentralisierten EPC (210) über das Freigeben und das Verhalten zu informieren, und
eine zweite Verbindung für die IP-Sitzung und die Benutzersitzung durch einen Tunnel zwischen dem PGW (232) und einem anderen PGW (232) für den anderen verteilten EPC zu koordinieren, wobei der Tunnel die gehaltenen IP-Ressourcen am verteilten EPC und neue Verbindungsressourcen am anderen verteilten EPC nutzt;
wobei der verteilte EPC dazu ausgelegt ist, Daten für die Benutzersitzung und die IP-Sitzung vom Tunnel, durch das PGW am verteilten EPC und zum Netzwerk zu leiten.

10. Verteilter EPC (220) nach Anspruch 9, wobei das SGW (230) ferner dazu ausgelegt ist, die Benutzersitzung für eine UE-Mobilität unter einer Vielzahl von Funkknoten (204), die an das SGW (230) koppelbar sind, zu verankern.

11. Verteilter EPC (220) nach Anspruch 9, wobei die Steuerebene an einen Heimteilnehmerserver HSS (214) am zentralisierten EPC (210) koppelbar ist.

12. Verteilter EPC (220) nach Anspruch 11, wobei die MME (226) ferner dazu ausgelegt ist, die UE für die erste Verbindung beim HSS (214) zu authentifizieren.

13. Verteilter EPC (220) nach Anspruch 9, wobei die MME (226) ferner dazu ausgelegt ist, eine Anforderung von einer anderen MME (226) für den anderen verteilten EPC (220), für die erste Verbindung die Verbindungsressourcen freizugeben und die IP-Sitzung aufrechtzuerhalten, zu empfangen, wobei die Anforderung ihren Ursprung an der UE hat und von der UE zu dem anderen Funkknoten (204) zu der anderen MME (226) transportiert wird.

14. Verteilter EPC (232) nach Anspruch 9, wobei das PGW (232), das SGW (230) und die MME (226) als virtuelle Funktionen auf mindestens einem Verarbeitungssystem implementiert werden.

## Revendications

1. Procédé exécuté au niveau d'un premier noyau de paquet évolué distribué, EPC, (220), consistant à :
gérer une session d'utilisateur et une session Internet Protocol, IP, pour une connexion entre un équipement utilisateur, UE, et un réseau, comprenant :
l'établissement (420) de la session d'utilisateur et de la session IP sur la connexion par l'intermédiaire du premier EPC distribué, ce premier EPC distribué comprenant une première passerelle de réseau à commutation de paquets PDN, PGW au niveau de laquelle la session IP est ancrée ;
le maintien (430) des ressources IP d'origine pour la session IP et la libération des ressources de connexion d'origine pour la session d'utilisateur au niveau du premier EPC distribué lorsque l'UE se déplace au-delà du premier EPC distribué jusqu'à un deuxième EPC distribué ;
l'établissement (440) d'un tunnel entre la première PGW et une deuxième PGW pour le deuxième EPC distribué, ce tunnel utilisant les ressources IP d'origine et de nouvelles ressources de connexion au niveau du deuxième EPC distribué ; et
l'acheminement (450) de données pour la session d'utilisateur et la session IP depuis le tunnel, à travers la première PGW, et jusqu'au réseau.

2. Procédé selon la revendication 1, dans lequel le maintien (430) des ressources IP d'origine et la libération des ressources de connexion d'origine comprennent en outre le fait d'informer un serveur d'abonné résidentiel, HSS, au niveau d'un EPC centralisé.

3. Procédé selon la revendication 2, dans lequel l'établissement (440) du tunnel comprend la réauthentification de l'UE avec le HSS selon les ressources IP d'origine.

4. Procédé selon la revendication 3, dans lequel l'établissement (440) du tunnel comprend l'obtention de valeurs des ressources IP d'origine depuis le HSS.

5. Procédé selon la revendication 2, dans lequel l'établissement (440) du tunnel comprend la coordination, par une première entité de gestion de mobilité, MME au niveau du premier EPC distribué, avec une deuxième MME au niveau du deuxième EPC distribué selon les ressources IP d'origine.

6. Procédé selon la revendication 1, comprenant en outre la réception d'une demande, au niveau d'une deuxième entité de gestion de mobilité, MME, au niveau du deuxième EPC distribué, venant de l'UE pour libérer les ressources de connexion d'origine et pour maintenir les ressources IP d'origine et la session IP.

7. Procédé selon la revendication 6, comprenant le réacheminement de la demande de libérer les ressources de connexion d'origine à une première MME au niveau du premier EPC distribué.

8. Procédé selon la revendication 1, dans lequel l'établissement (440) de la session d'utilisateur et de la session IP, le maintien et la libération, l'établissement du tunnel et l'acheminement sont exécutés par des fonctions virtuelles mises en oeuvre sur au moins un système de traitement.

9. Noyau de paquet évolué distribué, EPC (220), comprenant :
un plan utilisateur (224) pouvant être couplé entre un réseau (202) et un noeud radio (204) desservant un équipement utilisateur (140), ce plan utilisateur (224) comprenant :
une passerelle de réseau à commutation de paquets, PGW (232), configurée de façon à ancrer une session Internet Protocol, IP, pour l'UE, et
une passerelle de desserte, SGW (230), configurée de façon à ancrer une session d'utilisateur pour l'UE ; et
un plan de commande (222) comprenant une entité de gestion de mobilité, MME (226), configurée de façon à coordonner une première connexion pour la session IP et la session d'utilisateur et, lorsque l'UE commence à être desservi par un autre noeud radio (204) couplé à un autre EPC distribué (220), de façon à :
demander à la PGW (232) de libérer les ressources de connexion et de maintenir les ressources IP pour la première connexion,
informer un EPC centralisé (210) de cette libération et de ce maintien, et à coordonner une deuxième connexion pour la session IP et la session d'utilisateur par l'intermédiaire d'un tunnel entre la PGW (232) et une autre PGW (232) pour l'autre EPC distribué, ce tunnel utilisant les ressources IP maintenues au niveau de l'EPC distribué et de nouvelles ressources de connexion au niveau de l'autre EPC distribué ;
l'EPC distribué étant configuré de façon à acheminer des données pour la session d'utilisateur et la session IP depuis le tunnel, à travers la PGW au niveau de l'EPC distribué, et jusqu'au réseau.

10. EPC distribué (220) selon la revendication 9, dans lequel la SGW (230) est configurée en outre de façon à ancrer la session d'utilisateur pour la mobilité de l'UE parmi une pluralité de noeuds radio (204) pouvant être couplés à la SGW (230).

11. EPC distribué (220) selon la revendication 9, dans lequel le plan de commande peut être couplé à un serveur d'abonné résidentiel, HSS (214) au niveau de l'EPC centralisé (210).

12. EPC distribué (220) selon la revendication 11, dans lequel la MME (226) est configurée en outre de façon à authentifier l'UE avec le HSS (214) pour la première connexion.

13. EPC distribué (220) selon la revendication 9, dans lequel la MME (226) est configurée en outre de façon à recevoir une demande d'une autre MME (226) pour l'autre EPC distribué (220) afin de libérer les ressources de connexion et de maintenir la session IP pour la première connexion, cette demande provenant de l'UE et passant de l'UE à l'autre noeud radio (204), à l'autre MME (226).

14. EPC distribué (232) selon la revendication 9, dans lequel la PGW (232), la SGW (230) et la MME (226) sont mises en oeuvre comme des fonctions virtuelles sur au moins un système de traitement.
